# EUROPEAN PATENT APPLICATION

(11) **EP 4 793 899 A1**
(43) Date of publication of application: **19.08.2026**
(21) Application number: 25158366.2
(22) Date of filing: 17.02.2025
(51) Int. Cl.: G06V 10/82, A01D 41/127, A01D 75/18

(54) **DETECTING A FOREIGN OBJECT INSIDE AN AGRICULTURAL HARVESTER MACHINE**

(71) Applicant: CNH Industrial Belgium N.V., 8210 Zedelgem (BE)
(72) Inventor: Leblicq, Tom, 8210 Zedelgem (BE); Mortier, Geert, 8210 Zedelgem (BE); Pieters, Michiel, 3000 Leuven (BE); Verboven, Pieter, 3000 Leuven (BE)
(74) Representative: CNH Industrial IP Department

(57) **Abstract**

The present disclosure provides a computer-implemented method of detecting a foreign object inside an agricultural harvester machine (10), the method comprising: harvesting a plurality of crops (40) using the agricultural harvester machine (10); capturing an input image of the plurality of harvested crops (26); reproducing the input image as an output image (58) using a computer algorithm trained on images of crops (62) with no foreign objects; determining a degree of difference between the input image and the output image (58); and determining if a foreign object is present in the input image (56) based on the degree of difference between the input image (56) and the output image (58).

## Description

### FIELD

The present invention relates to agricultural crop harvester machines, and in particular, crop harvester machines that can detect foreign objects in the crops that have been harvested, and computer-implemented methods of detecting foreign objects in crops harvested by crop harvester machines.

### BACKGROUND OF THE INVENTION

The present invention relates to detecting foreign objects that have been picked up by an agricultural harvester machine during crop harvesting.

Agricultural harvester machines may operate in fields which include crops. The harvester machine may harvest the crops, but they may also collect foreign objects (not crops) if there are foreign objects located within the crops. The foreign objects may damage the mechanisms inside the harvester machine or may contaminate the harvested crops. Therefore, it is desirable for the operator of the harvester machine to be informed if there are any foreign objects that have been harvested with the crops based on a sensor or detector, so that the operator or the machine autonomously can make a decision to expel the foreign object prior to the harvester machine processing the crops.

One solution for detecting foreign objects includes subjecting the crops to X-rays as they enter the harvesting machine using X-ray sources and X-ray sensors or detectors creating an X-ray image. The intensity of the signals captured by the X-ray sensors or detectors after the X-rays have passed through the crops with or without foreign object are analysed to determine whether a foreign object is present using direct image processing using intensity thresholding algorithms.

Such solutions work well for sufficiently massive metal objects as these objects absorb x-rays giving rise to a large signal resulting in simple image processing using intensity threshold segmentation. However, this method of foreign object detection does not work well for non-metallic objects or low-density objects because they are less effective at absorbing x-rays. This makes it difficult to differentiate the signal of the less dense foreign object from the harvested crops.

It is an aim of the present invention to improve on the prior art. Specifically, it is an aim of the present invention to detect foreign objects located in harvested crops which are unable to be detected by means of the prior art. Examples of objects which the prior art is unable to detect includes low density objects, less massive objects, and objects which differ in shape from the harvested crops. These objects include cans, stones, animals, and small metal objects such as bolts and nails.

### SUMMARY OF THE INVENTION

According to an aspect of the present disclosure, there is provided a computer-implemented method of detecting a foreign object inside a harvester machine, the method comprising: harvesting a plurality of crops using the agricultural harvester machine; capturing an input image of the plurality of harvested crops; reproducing the input image as an output image using a computer algorithm trained on images of crops with no foreign objects; determining a degree of difference between the input image and the output image; and determining if a foreign object is present in the input image based on the degree of difference between the input image and the output image.

Using this approach, it is possible to detect foreign objects in real-time irrespective of their material composition. For example, in addition to metallic objects, high density objects and massive objects, foreign objects may be detected which are non-metallic, low density objects, small objects, and objects which differ from the crops used to train the computer algorithm. They may differ in terms of shape and/or density, for example.

In an embodiment, the computer algorithm comprises at least one machine learning model.

In an embodiment, the machine learning model is an autoencoder. An autoencoder is a model which is well suited for detecting anomalies.

In an embodiment, determining a degree of difference between the input image and the output image comprises calculating a difference metric between the input image and output image.

In an embodiment, calculating a difference metric between the input image and output image comprises comparing corresponding pixel values between the input image and the output image.

In an embodiment, determining if a foreign object is present comprises determining if the degree of difference between the input image and the output image is below or above a set threshold difference metric.

In an embodiment, determining if a foreign object is present comprises: determining presence of the foreign object is indicated by the loss being higher than the threshold loss; and determining absence of the foreign object is indicated by the loss being lower than a threshold value.

In an embodiment, the foreign object comprises an object that is different in density and/or shape than the crops used to train the computer algorithm.

In an embodiment, the crops include at least one of corn or grass.

In an embodiment, capturing an input image is capturing an x-ray image of the plurality of harvested crops.

According to an aspect of the disclosure there is provided a computer-implemented method of operating an agricultural harvester machine comprising: providing the agricultural harvester machine; and detecting a foreign object in the plurality of crops inside the forage agricultural harvester machine using the method of any preceding embodiment.

Operating an agricultural harvester machine in this way facilitates the agricultural harvester machine to detect foreign objects in real-time irrespective of their material composition.

According to an embodiment of the disclosure, the disclosure further comprises outputting an alert to a user of the agricultural harvester machine in response to a determining the presence of a foreign object.

According to an embodiment of the disclosure, the disclosure further comprises stopping operation of at least one roller of the agricultural harvester machine in response to determining the presence of a foreign object.

According to an embodiment of the disclosure, the disclosure further comprises reversing the operation of at least one roller of the agricultural harvester machine to expel the foreign object from the agricultural harvester machine.

According to an aspect of the disclosure, there is provided a transitory, or non-transitory, computer-readable medium, having instructions stored thereon that when executed by at least one processor, causes the at least one processor to perform the computer-implemented method of any preceding embodiment.

According to an aspect of the disclosure there is provided an agricultural harvester machine comprising: an image system; at least one processor; and storage including instructions that when executed by the at least one processor, cause the at least one processor to: detect a foreign object in the plurality of crops inside the forage agricultural harvester machine using the computer-implemented method of any preceding embodiment.

Providing an agricultural harvester machine in this way facilitates the agricultural harvester machine to detect foreign objects in real-time irrespective of their material composition.

According to an aspect of the disclosure, there is provided a computer-implemented method of training a machine learning model to reproduce an input image of harvested crops as an output image of the harvested crops for detecting foreign objects in the harvested crops in the input image, the method comprising: receiving a plurality of input images of harvested crops absent of any foreign objects; reproducing the input images as output images using the machine learning model; computing a difference between the input images and output images; and optimising the weights of the machine learning model to reduce the difference between the input images and output images.

Training a machine learning model in this way means that it is possible to detect foreign objects in real-time irrespective of their material composition.

**In** an embodiment the machine learning model is an autoencoder.

**In** an embodiment the computing a difference between the input images and output images comprises calculating a difference metric between the input image and the output image, and wherein optimising the weights of the machine learning model comprises optimising the weights of the machine learning model to reduce the loss.

**In** an embodiment calculating the loss between the input image and the output image comprises comparing corresponding pixel values between the input image and the output image.

**In** an embodiment, the crops comprise at least one of corn or grass.

**In** an embodiment, the foreign object comprises an object that is different in density and/or shape than the crops used to train the computer algorithm.

**In** an embodiment, non-ferrous metallic objects comprise at least one of soda cans, jewellery, and machinery, and/or wherein non-metallic objects comprise at least one of animals, wood, stones, concrete and plastic.

In an embodiment, the input images include a combination of synthetic images and real-world images.

An embodiment further comprises combining real-world images in different combinations to form the synthetic images.

In an embodiment, combining real-world images in different combinations to form the synthetic images comprises combining the different combinations of real-world images in a depth direction.

In an embodiment, combining the different combinations of real-world images in a depth direction comprises combining the different combinations of real-world images by stitching two real-world images and/or volumes together.

In an embodiment, combining the different combinations of real-world images in the depth direction comprises combining different combinations of the real-world images at different orientations.

**In** an embodiment, the images are x-ray images.

According to an aspect of the disclosure, there is provided a computer-implemented method of generating synthetic training data for training a machine learning model to reproduce an input image of harvested crops as an output image of the harvested crops for detecting foreign objects in the harvested crops in the input image, the method comprises: receiving a plurality of images of harvested crops absent of any foreign object; constructing a plurality of synthetic images using combinations of the received plurality of images of the harvested crops.

Generating synthetic images enables additional training images to be generated without needing to image each combination individually. Using more training images when training the model may lead to a more accurate model. Generating synthetic images in this way may save time in comparison to acquiring real-world images.

In an embodiment, constructing a plurality of synthetic images comprises combining different combinations of two or more different received images of the harvested crops from the plurality of received images of harvested crops.

An embodiment further comprises, receiving a plurality of images of foreign objects, wherein constructing a plurality of synthetic images comprises combining two images of the harvested crops and one image of the foreign object.

In an embodiment, constructing a plurality of synthetic images comprises stitching the different combinations of received images together.

In an embodiment, stitching the different combinations of received images together comprises adding pixels values from one of the received images to the corresponding pixel values of another received image.

In an embodiment, constructing a plurality of synthetic images comprises: selecting a received image; generating a mirrored version of the received image; and combining the selected received image and the mirrored version of the received image.

In an embodiment, constructing a plurality of synthetic images comprises: selecting a received image; rotating the received image; and then combining the rotated image with a received image.

### BRIEF DESCRIPTION OF THE DRAWINGS

Embodiments of the present invention are best understood with reference to the accompanying figures, in which:
Figure 1 shows a side schematic view of an agricultural harvester machine according to one or more embodiments;
Figure 2 shows a side schematic view of an imaging system within the crop receiving device of the agricultural harvester machine;
Figure 3 shows a block diagram of a computer of the agricultural harvester machine of Figure 1 used for implementing one or more of the computer-implemented methods described herein, according to one or more embodiments;
Figure 4 shows a side schematic view of the agricultural harvester machine from Figure 1 in use according to one or more embodiments;
Figure 5A shows a block diagram of an autoencoder used as a machine learning model for use in detecting foreign objects in images of crops harvested by the agricultural harvester machine of Figure 1, according to one or more embodiments;
Figure 5B shows similar view to Figure of the autoencoder including input and output images and the resulting difference image according to one or more embodiments;
Figure 5C shows a graph displaying a threshold difference metric for determining whether a foreign object is present in the image according to one or more embodiments;
Figure 6 shows a perspective schematic view of a real-world imaging set-up for acquiring input images for training the autoencoder according to one or more embodiments.
Figure 7 shows a block diagram of the autoencoder of Figure 5A receiving input images for training the autoencoder and the resulting reconstructed images, according to one or more embodiments;
Figure 8A shows side views of 3D images of boxes of harvested crops for training the machine learning model according to one or more embodiments;
Figure 8B shows a process flow chart of generating a synthetic image from a combination of two images of the boxes;
Figure 8C shows a real-world setup of generating an image;
Figure 9 shows a process flow chart of an image of a foreign object stitched to a plurality of images of boxes including harvested crops without any foreign objects to generate a synthetic image, according to one or more embodiments;
Figure 10 shows a flowchart summarising a computer-implemented method of detecting a foreign object inside an agricultural harvester machine according to one or more embodiments;
Figure 11 shows a flowchart summarising a computer-implemented method of operating an agricultural harvester machine according to one or more embodiments;
Figure 12 shows a flowchart summarising a computer-implemented method of training a machine learning model to reproduce an input image of harvested crops as an output image of the harvested crops for detecting foreign objects in the harvested crops in the input image according to one or more embodiments; and
Figure 13 shows a flowchart summarising a computer-implemented method of generating synthetic training data for training a machine learning model to reproduce an input image of harvested crops as an output image of the harvested crops for detecting foreign objects in the harvested crops in the input image according to one or more embodiments.

### DETAILED DESCRIPTION OF THE DRAWINGS

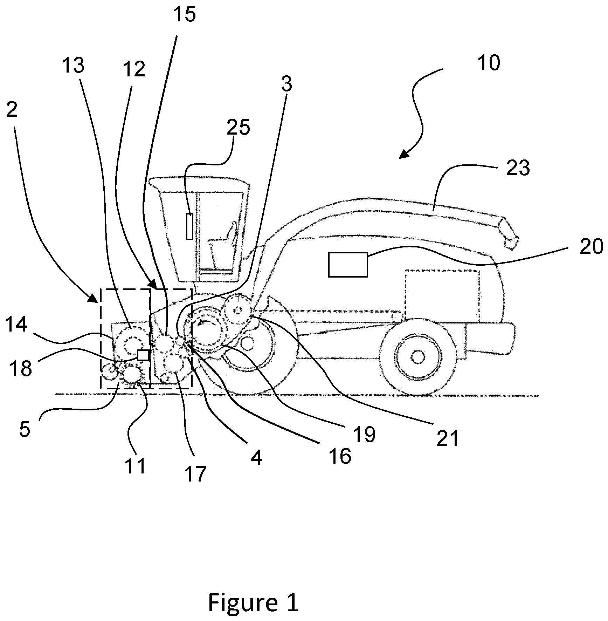

With reference to Figure 1, an agricultural harvester machine 10 includes an intake housing 12, a header 2 and a computer 20.

The agricultural harvester machine 10 may be any type of agricultural harvester machine such as a forage harvester.

The header 2 may include a crop receiving device 14. The crop receiving device 14 may include an opening 5 (e.g. an inlet) for receiving crops being harvested. Crops may include, but not limited to, corn (maize), alfalfa (lucerne), grass (pasture or hay crops), clover, sorghum, ryegrass, barley (for whole-plant silage), oats (for whole-plant silage), wheat (for whole-plant silage), millet, triticale, peas, vetch, soybeans (for forage), sugar beet tops, canola (for forage), kale (fodder crops), brassicas (e.g. turnip tops or forage rape), rice straw and sunflowers (for silage or forage).

The header 2 may include a series of rollers 11, 13 which are configured to move the harvested crops through the header 2 to the intake housing 12.

The agricultural harvester machine 10 may include an imaging system 18. The imaging system 18 may be in the header 2. Alternatively, the imaging system 18 may be in between the header 2 and the intake housing 12.

The intake housing 12 may include a series of front rollers 15, 17 and a series of back rollers 3, 4 which are configured to move the harvested crops through the agricultural harvester machine 10 for processing. The rollers 3, 4, 15, 17 may rotate in one direction when harvesting the crops to transport the harvested crops through the agricultural harvester machine 10 for storing or processing. The rollers may rotate in an opposite direction to expel any harvested material. That is to say that the operation of the rollers 3, 4, 15, 17 may be reversed to expel the foreign object from the agricultural harvester machine 10. The intake housing 12 may include an opening 16 (e.g. an outlet of the intake housing 12) to the harvested crops to a chopping drum 19.

The chopping drum 19 may have a plurality of teeth spaced around its circumference. The teeth chop the harvested crops into pieces and feed them to a conveyor device 21. The pieces of crops leave the harvester 10 to another vehicle driving adjacent to the harvester via a discharge shaft 23. The other vehicle acts as a hopper to store the harvested crops.

The harvester 10 may also include a user interface device 25. The user interface device 25 is in communication with the computer 20. The user interface device 25 may include a touch screen and may be configured to display information and receive user inputs. The user interface device 25 may also include a speaker for outputting sound to a user. In other embodiments, the user interface device 25 may not be part of the harvester but may be a separate component, e.g. a mobile device such as a smart phone or tablet computer.

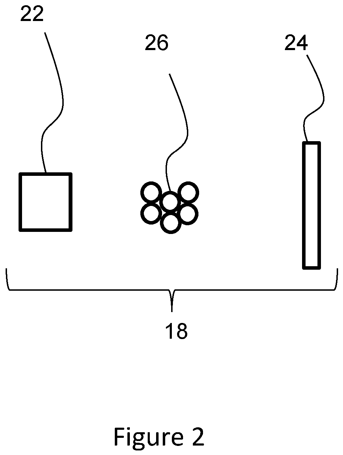

With reference to Figure 2, the imaging system 18 may include an imaging source 22 and an imaging sensor 24. The harvested crops 26 passing through the agricultural harvester machine 10 may pass in between the imaging source 22 and the imaging sensor 24. As the harvested crops 26 pass in between the imaging source 22 and the imaging sensor 24, an image of the harvested crops 26 may be captured. The imaging system 18 may capture an input image. The input image may be an image capturing transmitted radiation from a radiation source. For example, the input image may be an x-ray image of the plurality of harvested crops 26 when the image source 22 may be an x-ray source, and the image sensor 24 may be an x-ray sensor.

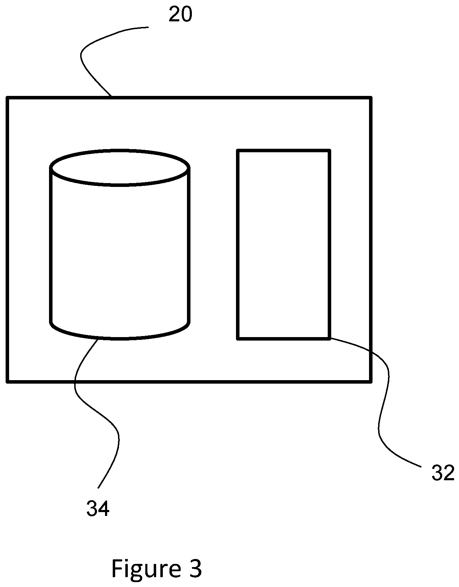

With reference to Figure 3, the computer 20 includes a processor 32 and storage 34 and may be configured to store images captured by the imaging system. The computer may be further responsible for detecting a foreign object inside the agricultural harvester machine or another computer may retrieve the images from the .storage. The storage of the computer, or the remote computer, acts as non-transitory, computer-readable medium, having instructions stored thereon, that when executed by one or more processors, cause the one or more processors to perform the computer-implemented methods described herein. When storing the instructions to the storage, they may be in the form of transitory computer readable media, e.g. a download signal. The computer-implemented methods may include a computer-implemented method of detecting a foreign object inside an agricultural harvester machine.

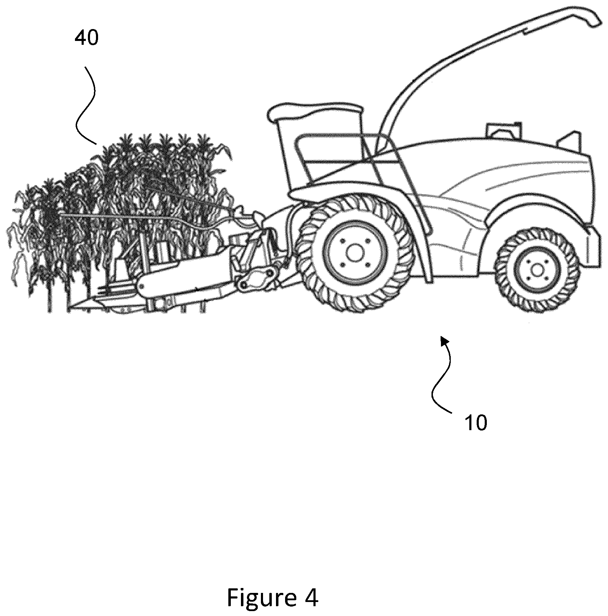

With reference to Figure 4, the computer-implemented method of detecting a foreign object inside an agricultural harvester machine 10 comprises harvesting a plurality of crops 40 using the agricultural harvester machine 10.

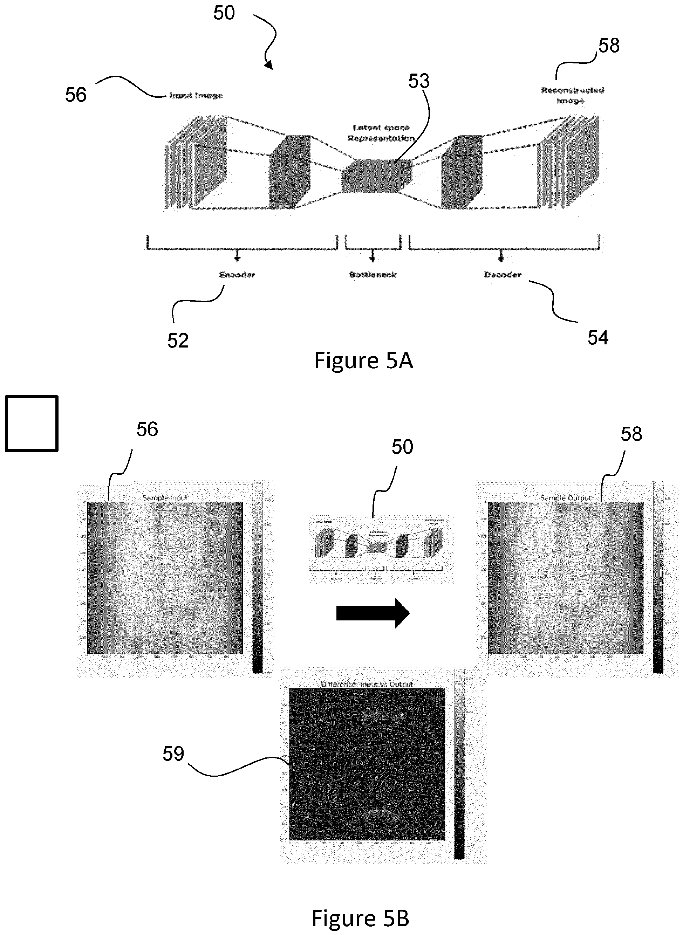

With reference to Figures 5A to 5C, the method also includes capturing an input image 56 of the plurality of harvested crops. The method also includes reproducing the input image as an output image 58 using a machine learning model trained on images of crops with no foreign objects. The method also includes determining a degree of difference between the input image and the output image. The method also includes determining if a foreign object is present in the input image based on the degree of difference between the input image 56 and the output image 58.

With reference to Figure 5A, the machine learning model may be an autoencoder 50. The autoencoder 50 may include an encoder 52 and a decoder 54. Each of the encoder 52 and the decoder 54 may be a neural network. The encoder 52 may receive an input image 56 and encode the input image into a latent space or a probabilistic vector 53. The decoder 54 may decode the latent space vector and output a reproduction of the input image 56 as an output image 58.

With reference Figure 5B, determining a degree of difference between the input image 56 and the output image 58 may include calculating a difference metric between the input image and output image. Calculating a difference metric between the input image 56 and output image 58 comprises comparing corresponding pixel values between the input image 56 and the output image 58. The difference metric may be a loss. The loss may be represented as a difference image 59, as shown in Figure 5B. The corresponding pixels of the input image 56 and output image 58 may be compared by using, but not limited to, any of the following methods: Mean Square Error (MSE), Mean Absolute Error (MAE), Structural Similarity Index (SSIM) Loss, Perceptual Loss, Hybrid Loss, Contextual Loss, KL Divergence, Adversarial Loss, Total variation (TV) loss, Contrastive Loss, Weighted Loss, Custom Loss Functions, or subtraction.

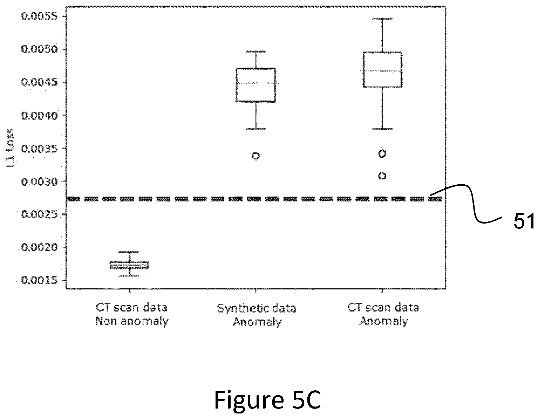

With reference to Figure 5C, determining if a foreign object is present may include determining if the degree of difference between the input image 56 and the output image 58 is below or above a set threshold 51 difference metric. The set threshold 51 difference metric may be a threshold loss.

With reference to Figure 5C, determining if a foreign object is present may further include: determining presence of the foreign object is indicated by the difference metric being higher than or equal to the threshold difference metric and determining absence of the foreign object is indicated by the difference metric being lower than a threshold difference metric value. For example, presence of the foreign object may be indicated by the loss, between the output and input images, being higher than or equal to the threshold loss. Absence of the foreign object is indicated by the loss being lower than a threshold loss.

According to an embodiment, the presence of a foreign object may be determined without the use of a threshold difference metric. In this embodiment, the difference metric may be used in combination with the input image and output image to determine the presence of a foreign object.

Foreign objects may comprise at least one of ferrous objects, non-ferrous metallic objects, and non-metallic objects. Non-ferrous metallic objects may include, but not limited to, soda cans, jewellery, coins and machinery components. Non-metallic objects may include, but not limited to, animals, wood, plastic, stones, concrete, and fabric.

According to an embodiment, a method of operating an agricultural harvester machine includes: providing the agricultural harvester machine comprising a crop receiving device within an intake housing of the agricultural harvester machine; detecting a foreign object in the plurality of crops inside the agricultural harvester machine using the method of any preceding embodiment; and wherein capturing an input image of the plurality of harvested crops comprises capturing the input image at an opening of the crop receiving device.

In response to determining the presence of a foreign object, the method may include outputting an alert to a user of the agricultural harvester machine 10. The alert may be an audible alert or a visual alert, or both. The alert may be provided on the user interface device 25 (Figure 1).

The method may further include stopping operation of agricultural harvester machine 10 in response to determining the presence of a foreign object. This means that the rollers 11, 13, 15, 17, 3, 4 stop turning which stops the harvested crops and the foreign object being transported through the agricultural harvester machine 10. This reduces the risk of the foreign object damaging the agricultural harvester machine 10 as the foreign object is no longer able to travel through the agricultural harvester machine 10.

The method may further comprise reversing the operation of the header 2 and intake housing 12 to expel the foreign object from the agricultural harvester machine 10. In this way, the rollers 11, 13, 15, 17, 3, 4 now rotate in the opposite direction than the direction during harvesting. This may expel the foreign object and crops from within the header 2 and the intake housing 12 through the opening 5. This enables the user of the agricultural harvester machine 10 to inspect the expelled foreign object and remove it from the harvesting area.

The machine learning model describes above requires training in order to optimise the weights for reproducing input images of crops as output images of crops. Therefore, when foreign objects are included in the input images, the weights will not be optimised to reproduce the input image as an output image, and therefore, the output image will be different to the input image.

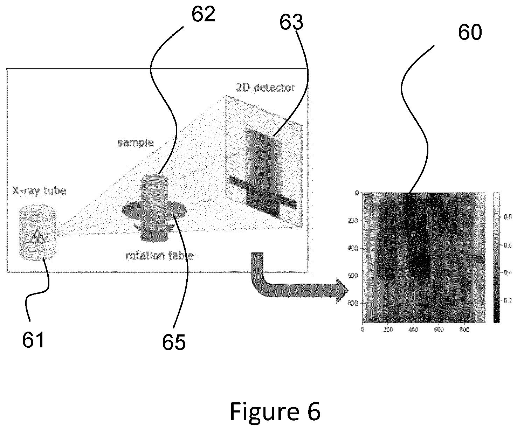

With reference to Figure 6, the input images 60 may include images of harvested crops 62 in a controlled environment. The input images 60 may be x-ray images. The input images 60 may be acquired using a computerised tomography (CT) scanner such that a plurality of input images 60 of the harvested crops absent of any foreign objects are captured at different angles. The CT scanner include an X-ray emitter 61 and a detector 63. A rotating table 65 may also be provided. The crops 62 are placed onto the rotating table 65. In order to capture a larger number of training images, the crops are rotated on the table 65 to capture images of the crops 62 at different angles. The detector may be a two-dimensional detector 63.

Crops may include, but not limited to, corn (maize), alfalfa (lucerne), grass (pasture or hay crops), clover, sorghum, ryegrass, barley (for whole-plant silage), oats (for whole-plant silage), wheat (for whole-plant silage), millet, triticale, peas, vetch, soybeans (for forage), sugar beet tops, canola (for forage), kale (fodder crops), brassicas (e.g. turnip tops or forage rape), rice straw and sunflowers (for silage or forage).

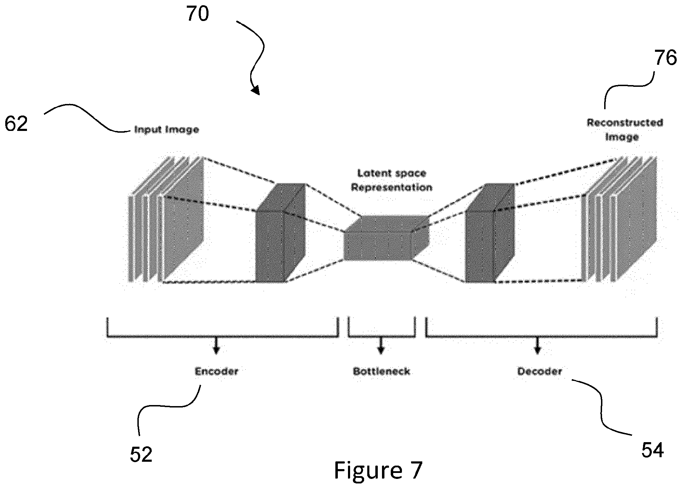

With reference to Figure 7, present embodiments relate to a computer-implement method of training a machine learning model to reproduce an input image of harvested crops as an output image of the harvested crops for detecting foreign objects in the harvested crops in the input image. This method may be performed by a similar computer as shown in Figure 3, but offline, i.e. not on the vehicle or harvester 10.

The method comprises receiving a plurality of input images of harvested crops absent of any foreign object. The input images may include synthetic images. Creation of the synthetic images is described in more detail below.

With reference to Figure 7, the machine learning model may be the same machine learning model as described above. The autoencoder 50 may include an encoder 52 and a decoder 54. The encoder 52 may receive an input image 62 and the decoder 54 may output a reproduction of the input image 62 as an output image 76.

The method may further include computing a difference between the input images 60 and output images 76 and optimising the weights of the machine learning model to reduce the difference between the input images 62 and output images 76. Computing a difference between the input 62 and output images 76 may include calculating a difference metric between the input image 62 and the output image, and optimising the weights of the machine learning model may include optimising the weights of the machine learning model to reduce the difference metric. Calculating the loss between the input image 62 and the output image 76 comprises comparing corresponding pixel values between the input image 62 and the output image 76.

In more detail, the loss may be a mean squared loss, or another difference metric as described before, resulting from comparing the input image 62 and the output image 76. Optimising the weights may be performed using algorithms such as back-propagation and an optimisation algorithm such as gradient descent to optimise the weights of both the encoder 52 and the decoder 54.

It is important to note that the machine learning model can be trained using input images of crops without any foreign objects. This is so that the machine learning model's weights are optimised to reproduce images of crops without foreign object, and not to reproduce images of crops with foreign objects. Therefore, when the machine learning model is used for inference on input images of crops without foreign objects the loss will be lower than when reproducing input images of crops including foreign objects.

With further reference to Figure 5C, a difference metric threshold may be set so that future encounters of input images can be classified as either including a foreign object or absent a foreign object depending on the difference metric compared to the difference metric threshold. For example, if the loss is greater than or equal to a loss threshold, then it is considered that the input image includes a foreign object. If the loss is less than a loss threshold, then it is considered that the input image does not include a foreign object.

Therefore, to set the difference metric threshold, images of crops absent foreign objects, and images of crops including foreign objects are required. More appropriately, the input images including foreign objects and crops may include synthetic images and original, non-synthetic images from the CT scanner directly. The input images including only crops absent any foreign objects does may be original, non-synthetic images.

The difference metric threshold 51 may be manually determined or automatically determined using an optimization algorithm (minimizing the number of misclassifications)

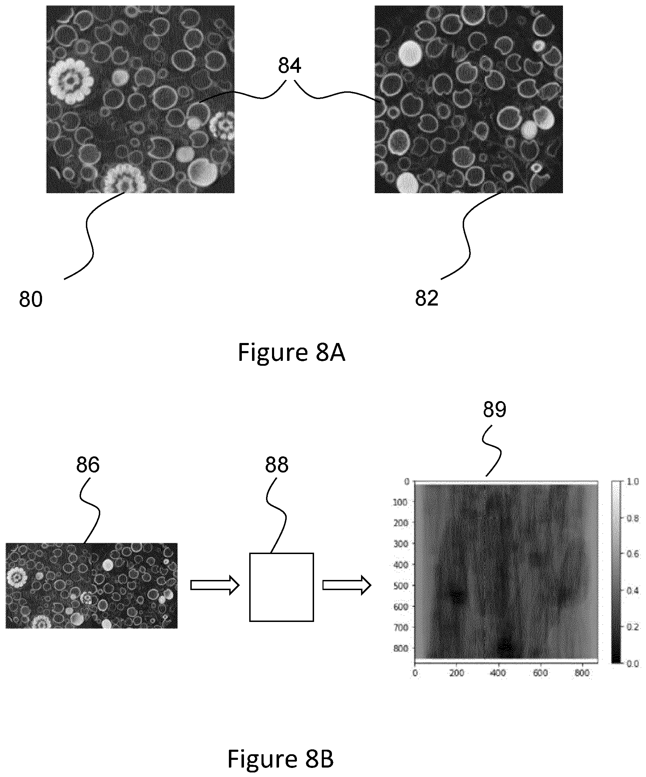

With reference to Figures 8A and 8B, present embodiments may relate to a computer-implemented method of generating synthetic training data for training the machine learning model to reproduce an input image of harvested crops as an output image of the harvested crops for detecting foreign objects in the harvested crops in the input image. The method includes receiving a plurality of images of harvested crops 84 absent of any foreign object. These images may be synthetic images captured based on images of boxes of crops using the set-up shown in Figure 6, for example.

With specific reference to Figure 8B the method further includes constructing a plurality of synthetic images/volumes 89 using combinations of the received plurality of images 80, 82 of the harvested crops 84. Constructing a plurality of synthetic images 89 includes combining different combinations of two or more different received images of the harvested crops 84 from the plurality of received images of harvested crops 84. For example, two or more images 80, 82 of respective boxes are captured. The images are captured using the set-up from Figure 6. The images 80, 82, of the boxes may be three-dimensional (3D) images. Those images are shown from a side view in Figure 8A. In other words, in Figure 8A, a front of a box is on a left side of the image and a rear of a box is on a ride side of the image. To construct the synthetic image, the images 80, 82 may be combined in different orientations. For example, the images 80, 82 of the boxes may be mirrored and/or rotated. Constructing a plurality of synthetic images includes stitching the different combinations of received images together. Stitching the different combinations of received images together comprises adding pixel values from one of the received images to the corresponding pixel values of another received image. The stitching may occur in a depth direction, namely a direction normal to a plane in which the two-dimensional images extend.

Combining images means that fewer real-world images are required to train the machine learning model which can be time consuming. As an illustrative, nonlimiting example, by obtaining 180 projections image by rotating the image, it is possible to have a training set with 64800 synthetic images. This number is arrived at because there are 180² projections for a combination of two images, giving 32400 synthetic images. This leads to 64800 images once mirroring has been taken into account for one of those images, or 129600 synthetic images when both images have been mirrored. The rotations may be obtained by rotating the CT scanner or the table upon which the box is mounted. The combination of images may then be used as an input into a tomography toolbox 88 to output a synthetic image 89 which is a tomographic image of the combined image 86. For example, the tomography toolbox 88 may be an Astra toolbox. Other tomography toolboxes may be used such as TIGRE toolbox.

As explained above, the images of the boxes are CT data in 3D. These are stitched together to create a larger synthetic 3D image. X-ray 2D projections are then taken of the larger synthetic 3D image to generate a 2D image. This final 2D image may be known as the synthetic image. This is a function of the tomography toolbox 88.

In this way, constructing a plurality of synthetic images includes selecting a received image; generating a mirrored version of the received image; and combining the selected received image and the mirrored version of the received image.

In this way, constructing a plurality of synthetic images includes: selecting a received images; rotating the received images; and then combining the rotated image with a received image.

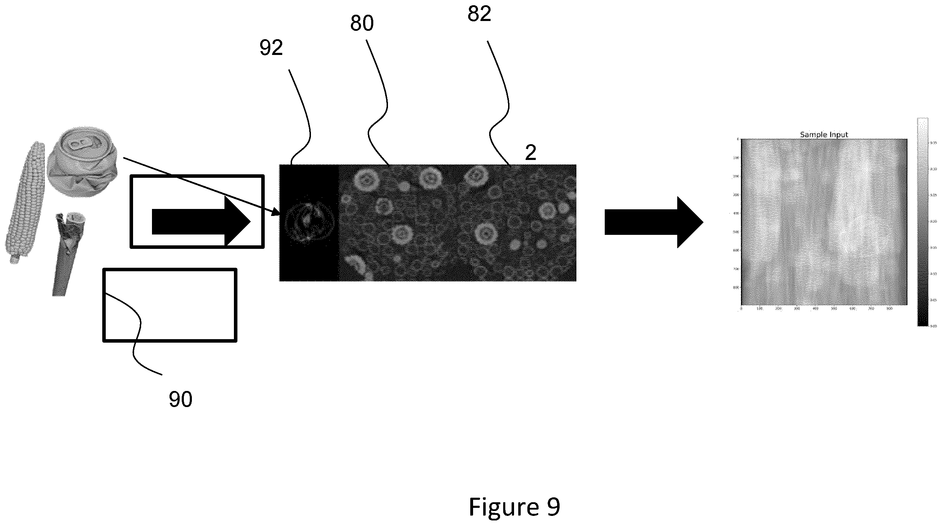

With reference to Figure 9, in order to determine the difference metric threshold as described above in relation to Figure 5C, it is necessary to obtain images where a foreign object is present in the image of the crops. The foreign objects 90 may be included in an object box 92. An image may be captured of the object box using the same set up as shown in Figure 6 above. An image may be captured at different orientations, and the image may be mirrored and/or rotated. The horizontal and vertical location of the foreign object may also be varied. For example, a soda can may be moved up/down and/or left/right in the lower black box. Rigid and non-rigid transformations/translations may be applied to the boxes and to the foreign object to introduce special variability. The gray values may also be synthetically augmented to introduce the desired density variability of the material. The image of the foreign object may be stitched together with two or more images of boxes of only crops without foreign objects. This stitching may be in the real world or stitched artificially using the tomography approach described above. In this way, it is possible to obtain two sets of images including both crops and foreign objects, one where the combinations are constructed in the real world and scanned, and then one set where the images are created artificially. Those image sets, together with an image set of the synthetic images of crops without foreign objects are used to determine the difference metric threshold.

Using this approach, it is possible to detect foreign objects in real-time irrespective of their material composition. For example, this method works for materials that are not only metallic objects or high density objects, but also low density objects, less massive objects, and objects which differ in shape from the harvested crops.

In alternative embodiments, other machine learning models may be used instead of an autoencoder. For example, the machine learning model may include Convolutional Neural Networks (CNNs).

In alternative embodiments, other machine learning models may be used instead of an autoencoder. Examples and not limiting to Support Vector Machines (SVMs), Random Forests, k-Nearest Neighbors (k-NN), Principal Component Analysis (PCA), k-Means, Linear and Logistic Regression, Decision Trees, Gradient Boosting Machines (GBMs), Naive Bayes, Convolutional Neural Networks (CNNs), Recurrent Neural Networks (RNNs), Transformers, attention mechanisms, Variational Autoencoders (VAEs), and Denoising Autoencoders, Hierarchical Clustering, and DBSCAN.

An example CNN may be YOLO (You Only Look Once). A YOLO algorithm is a real-time object detection model that works well for identifying foreign objects in images. Variants like YOLOv4, YOLOv5, and YOLOv8 offer improved accuracy and speed.

Alternatively, an SSD (Single Shot MultiBox Detector) provides good accuracy for detecting objects at multiple scales in a single forward pass.

A faster R-CNN: Known for high accuracy, especially useful for detecting small or complex objects but slower compared to YOLO and SSD.

Alternatively, the model may be a Transformer-Based Model.

An example transformer-based model may be DETR (DEtection TRansformer), which uses transformers for object detection, excelling in complex scenarios with cluttered backgrounds.

An alternatively model may be a Segmentation Model (for Precise Localization). Example segmentation models include Mask R-CNN: Extends Faster R-CNN by adding a segmentation branch, making it ideal for foreign object detection when precise boundaries are needed.

Another segmentation model may be UNet or DeepLab, which are useful for segmenting foreign objects in specific regions of an image.

Another type of model may be a GAN-based Approach, e.g. Generative Adversarial Networks can be used to detect out-of-distribution features or anomalies.

The machine learning model may also take a Hybrid Approach. For example, combining a detection model (e.g., YOLO or Faster R-CNN) with a segmentation model (e.g., Mask R-CNN) for scenarios requiring both detection and precise localization.

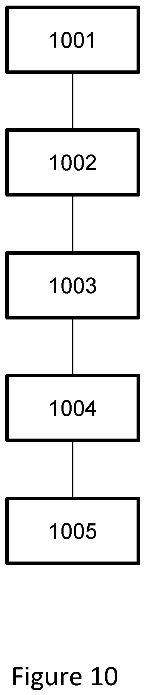

With reference to Figure 10, according to one or more embodiments, a computer-implemented method of detecting a foreign object inside an agricultural harvester machine may be summarised as comprising: harvesting 1001 a plurality of crops using the agricultural harvester machine; capturing 1002 an input image of the plurality of harvested crops; reproducing 1003 the input image as an output image using a machine learning model trained on images of crops with no foreign objects; determining 1004 a degree of difference between the input image and the output image; and determining 1005 if a foreign object is present in the input image based on the degree of difference between the input image and the output image.

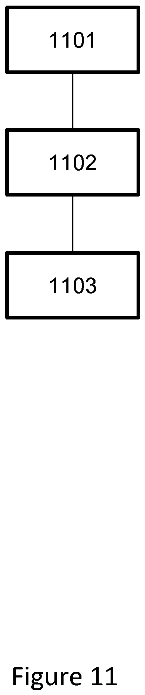

With reference to Figure 11, according to one or more embodiments, a computer-implemented method of operating an agricultural harvester machine may be summarised as comprising: providing 1101 the agricultural harvester machine comprising a crop receiving device within an intake housing of the agricultural harvester machine; and detecting 1102 a foreign object in the plurality of crops inside the agricultural harvester machine using the method of any preceding claim, wherein capturing an input image of the plurality of harvested crops comprises capturing 1103 the input image at an opening of the crop receiving device.

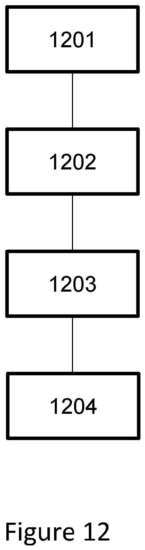

With reference to Figure 12, according to one or more embodiments, a computer-implemented method of training a machine learning model to reproduce an input image of harvested crops as an output image of the harvested crops for detecting foreign objects in the harvested crops in the input image may be summarised as comprising: receiving 1201 a plurality of input images of harvested crops absent of any foreign objects; reproducing 1202 the input images as output images using the machine learning model; computing 1203 a difference between the input images and output images; and optimising 1204 the weights of the machine learning model to reduce the difference between the input images and output images.

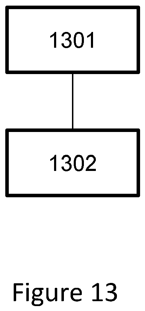

With reference to Figure 13, according to one or more embodiments, a computer-implemented method of generating synthetic training data for training a machine learning model to reproduce an input image of harvested crops as an output image of the harvested crops for detecting foreign objects in the harvested crops in the input image may be summarised as comprising: receiving 1301 a plurality of images of harvested crops absent of any foreign object; constructing 1302 a plurality of synthetic images using combinations of the received plurality of images of the harvested crops.

## Claims

1. A computer-implemented method of detecting a foreign object inside an agricultural harvester machine (10), the method comprising:
harvesting (1001) a plurality of crops (40) using the agricultural harvester machine (10);
capturing (1002) an input image of the plurality of harvested crops (26);
reproducing the input image (56) as an output image (58) using a computer algorithm trained on images of crops (62) with no foreign objects;
determining (1004) a degree of difference between the input image (56) and the output image (58); and
determining (1006) if a foreign object is present in the input image (56) based on the degree of difference between the input image (56) and the output image (58).

2. The computer-implemented method of Claim 1, wherein the computer algorithm comprises at least one machine learning model.

3. The computer-implemented method of Claim 2, wherein the machine learning model is an autoencoder (53).

4. The computer-implemented method of Claim 3, wherein determining a degree of difference between the input image (56) and the output image (58) comprises calculating a difference metric between the input image (56) and output image (58).

5. The computer-implemented method of Claim 4, wherein calculating a difference metric between the input image (56) and output image (58) comprises comparing corresponding pixel values between the input image (56) and the output image (58).

6. The computer-implemented method of Claim 3 or Claim 4, wherein determining if a foreign object is present comprises:
determining if the degree of difference between the input image (56) and the output image (58) is below or above a set threshold difference metric.

7. The computer-implemented method of Claim 6, wherein determining if a foreign object is present comprises:
determining presence of the foreign object is indicated by the difference metric being higher than the threshold difference metric; and
determining absence of the foreign object is indicated by the loss being lower than a threshold value.

8. The computer-implemented method of any preceding Claim, wherein the foreign object comprises an object that is different in density and/or shape than the crops used to train the computer algorithm.

9. The computer-implemented method of any preceding Claim, wherein crops (40) includes at least one of corn or grass.

10. The computer-implemented method of any preceding Claim, wherein capturing an input image (56) is capturing an x-ray image of the plurality of harvested crops (26).

11. A computer-implemented method of operating an agricultural harvester machine (10) comprising:
providing (1101) the agricultural harvester machine; and
detecting (1102) a foreign object in the plurality of harvested crops (26) inside the agricultural harvester machine (10) using the method of any preceding claim.

12. The computer-implemented method of Claim 11, further comprising outputting an alert to a user of the agricultural harvester machine (10) in response to a determining the presence of a foreign object.

13. The computer-implemented method of Claim 11 or Claim 12, further comprising stopping operation of at least one roller of the agricultural harvester machine (10) in response to determining the presence of a foreign object.

14. The computer-implemented method of Claim 11 or Claim 12, further comprising reversing the operation of at least one roller of the agricultural harvester machine (10) to expel the foreign object from the agricultural harvester machine (10).

15. An agricultural harvester machine, comprising:
an imaging system (18);
at least one processor (32); and
storage (34) including instructions that when executed by the at least one processor (32), cause the at least one processor to:
detect a foreign object in the plurality of harvested crops (26) inside the agricultural harvester machine (10) using the computer-implemented method of any of Claims 1 to 14.
